# EUROPEAN PATENT APPLICATION

(11) **EP 2 261 783 A1**
(43) Date of publication of application: **15.12.2010**
(21) Application number: 08873731.7
(22) Date of filing: 17.12.2008
(51) Int. Cl.: G06F 3/044, G06F 3/041

(54) **DISPLAY DEVICE, ELECTRONIC DEVICE PROVIDED WITH THE DISPLAY DEVICE, AND TOUCH PANEL**

(30) Priority: 31.03.2008 JP 2008091986
(71) Applicant: Sharp Kabushiki Kaisha, Osaka-shi, Osaka 545-8522 (JP)
(72) Inventor: TAKUSA, Yasunobu, Osaka-shi Osaka 545-8522 (JP)
(74) Representative: Müller - Hoffmann & Partner
(86) International application number: PCT/JP2008/003824
(87) International publication number: WO 2009/122473

(57) **Abstract**

A display device (40a) includes a touch panel (20a) installed in a display screen (S), the touch panel including: a touch detection electrode (11a) arranged at a first substrate (10) so as to be capable of detecting a touch; and a lead wiring (13a) connected to the touch detection electrode (11a) for detecting a touched position at the touch detection electrode (11a), wherein at least part of the lead wiring (13a) is arranged at a second substrate (15a) arranged adjacent to the first substrate (10).

## Description

### TECHNICAL FIELD

The present invention relates to a display device, electronic equipment provided with the display device, and a touch panel.

### BACKGROUND ART

Electronic equipment provided with a display device having installed therein a touch panel is structured to be operable e.g., by being touched through a touch panel, at an icon or the like displayed on a display screen of the display device. The touch panel is capable of exerting various actions based on operations of a user performed on the display screen, for example in the following manner. The touch panel reads the track of a finger on the display screen, thereby accepting any handwritten input of letters and/or drawings. Also, based on a gesture such as a finger stroke in one direction on the display screen, the touch panel carries out operations such as scaling up or down a displayed image, turning a page, and the like. Therefore, in recent years, the touch panel is installed in various types of electronic equipment such as an ATM (automated teller machine), an automated ticket machine, a monitor of a personal computer, a car navigation system, a game console, a PDA (personal digital assistant), a copying machine, and a mobile phone. In particular, it has now become indispensable input means to a car navigation system installed in a vehicle.

For example, PATENT DOCUMENT 1 discloses a liquid crystal display device in which a position detecting conductive film that structures a touch panel of an analog capacitive coupling type (capacitive type) is arranged integrally with a polarizer, a color filter dedicated glass and the like. According to the disclosure, the liquid crystal display device exhibits reduced weight and thickness, an enhanced sensitivity, an improved durability, and a suppressed time-dependent change.

### CITATION LIST

### PATENT DOCUMENT

PATENT DOCUMENT 1: Japanese Patent Publication No. 2000-81610

### SUMMARY OF THE INVENTION

### TECHNICAL PROBLEM

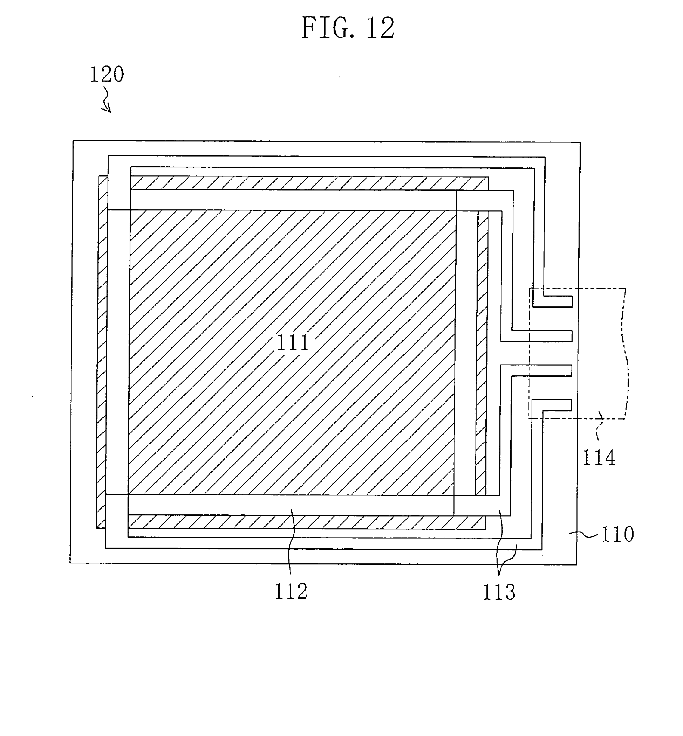

FIG. 12 is a plan view of a conventional touch panel 120 of the capacitive type.

As shown in FIG. 12, the touch panel 120 includes, for example, an insulating substrate 110, a transparent touch detection electrode 111 arranged in a rectangular manner on the insulating substrate 110, a frame wiring 112 arranged in a frame-like manner along the periphery of the touch detection electrode 111, and four lead wirings 113 arranged to be led from the four corners of the frame wiring 112 toward one edge of the insulating substrate 110. In the touch panel 120, as shown in FIG. 12, the lead wirings 113 are connected to position detection circuitry (not shown) via an FPC (flexible printed circuit) 114 so as to detect any touched position. Here, in the touch panel 120 installed in the display device, a display region that carries out image display is defined within the frame wiring 112, and a frame region is defined around the display region.

As described above, with the conventional touch panel, it is necessary to form a plurality of lead wirings at the frame region at the periphery of the substrate. Therefore, with a display device having installed therein the touch panel and electronic equipment provided with the display device, the frame region is increased in size relative to the display region, and hence the entire device (entire equipment) is increased in size. In particular, the electronic equipment for mobile use is required to have its display region enlarged, and to have its entire size reduced such that it can be carried in pockets or bags.
The present invention has been made in view of the foregoing, and an object thereof is to minimize the frame region to the minimum possible extent.

### SOLUTION TO THE PROBLEM

In order to achieve the above-described object, the present invention causes at least part of a lead wiring connected to a touch detection electrode to be arranged at a substrate other than a substrate at which the touch detection electrode is arranged.

Specifically, a display device in accordance with the present invention includes a touch panel installed in a display screen, the touch panel including a touch detection electrode arranged at a first substrate so as to be capable of detecting a touch, and a lead wiring connected to the touch detection electrode for detecting a touched position at the touch detection electrode. At least part of the lead wiring is arranged at a second substrate arranged adjacent to the first substrate.

In the structure described above, at least part of a lead wiring connected to a touch detection electrode is arranged at a second substrate other than a first substrate at which the touch detection electrode is arranged. Therefore, as compared to a conventional case where the touch detection electrode and the lead wiring are arranged at the same substrate, it becomes possible to design a frame region in the first substrate to be narrower. This allows the second substrate provided with at least part of the lead wiring to be disposed so as to overlap the frame region of the first substrate, which in turn makes it possible to minimize the frame region to the minimum possible extent in the display device.

It is noted that, when the second substrate is arranged adjacent to the first substrate by being adhered to each other having an adhesive member interposed therebetween, the strength of the display device can be improved. Further, by appropriately setting the refractive index of the adhesive member, reflected light at each material interface attributed to the refractive index difference between each of the materials is suppressed, which in turn makes it possible to improve the display quality.

The second substrate may be a flexible substrate having flexibility.

In the structure described above, because the second substrate is a flexible substrate such as an FPC (flexible printed circuit), the second substrate can be structured easily and cost-effectively. Further, by disposing the second substrate as being in a folded state and adjacent to the first substrate, it becomes possible to further reduce the frame region in size.

The touch detection electrode and the lead wiring may be connected via an anisotropic conductive film, and at least one of the touch detection electrode and the lead wiring may be formed in a comb-shape manner at a portion establishing the connection via the anisotropic conductive film.

In the structure described above, at least one of the connection portion of the touch detection electrode and the connection portion of the lead wiring is formed in a comb-shape manner. This surely connects the touch detection electrode and the lead wiring, and makes it possible to improve the reliability of the connection between the touch detection electrode and the lead wiring.

The touch panel may be of a capacitive type.

In the structure described above, the touch panel is of a capacitive type, which means that the touch panel body is structured by a single substrate. This suppresses the reflected light at the substrate interface attributed to the refractive index difference between the substrate structuring the touch panel and the adjacent constituent components. This makes it possible to improve the display quality of the display device, and to reduce the thickness of the display device.

The touch detection electrode may be arranged on only one plane side of the first substrate.

In the structure described above, for example, the touch detection electrode is arranged only on the front plane side of the first substrate. Therefore, as compared to a case where the touch detection electrode is arranged on each of the front plane side and the rear plane side of the first substrate, or where it is arranged at each of the first substrate and another substrate, occurrence of the reflected light attributed to the touch detection electrode is suppressed, whereby the display quality can be improved, and the thickness of the display device can be reduced. Further, as compared to a case where a plurality of touch detection electrodes are formed, an improvement in the manufacturing yield is facilitated, while the manufacturing steps are simplified and the required manufacturing period is shortened.

The display device may further include a display panel including a pair of substrates disposed so as to oppose to each other, wherein the first substrate is one of the pair of substrates.

In the structure described above, because the substrate (first substrate) structuring the touch panel, and the substrate (one of the pair of substrates) structuring the display panel are shared, occurrence of the reflected light attributed to the substrates structuring the touch panel is suppressed, whereby the display quality of the display device is improved, and the thickness of the display device can be reduced. Further, the resulting simplified manufacturing steps shorten the required manufacturing period, and facilitate an improvement in manufacturing yield.

The second substrate may be divided into a plurality of pieces.

In the structure described above, because the second substrate is structured with a plurality of substrates instead of a single substrate, the area required for the second substrate is reduced. Such a reduction reduces the manufacturing steps and the materials for use, which in turn makes it possible to contribute toward environment improvement.

The second substrate may be a cover substrate for protecting a surface of the touch panel.

In the structure described above, because the second substrate is structured by a cover substrate, in a case where the cover substrate is disposed on the front plane of the touch panel, the thickness of the display device can be reduced and manufacturing steps and the materials for use are suppressed, which in turn makes it possible to contribute toward environment improvement.

The touch panel may be of a resistive type.

In the structure described above, because the touch panel is of the resistive type, an easy pen-based input to the display device is realized.

Electronic equipment in accordance with the present invention includes the display device.

In the structure described above, the frame region of the display device is minimized to the minimum possible extent, which makes it possible to reduce the size of the electronic equipment that includes the display device.

A touch panel in accordance with the present invention includes: a touch detection electrode arranged at a first substrate so as to be capable of detecting a touch; and a lead wiring connected to the touch detection electrode for detecting a touched position at the touch detection electrode. At least part of the lead wiring is arranged at a second substrate arranged adjacent to the first substrate.

In the structure described above, at least part of a lead wiring connected to a touch detection electrode is arranged at a second substrate other than a first substrate at which the touch detection electrode is arranged. Therefore, as compared to a conventional case where the touch detection electrode and the lead wiring are arranged at the same substrate, it becomes possible to design a frame region in the first substrate to be narrower. This allows the second substrate provided with at least part of the lead wiring to be disposed so as to overlap the frame region of the first substrate, which in turn makes it possible to minimize the frame region to the minimum possible extent in the touch panel.

### ADVANTAGES OF THE INVENTION

In accordance with the present invention, because a lead wiring connected to a touch detection electrode is arranged at a substrate other than a substrate at which the touch detection electrode is arranged, it becomes possible to minimize the frame region to the minimum possible extent.

### BRIEF DESCRIPTION OF THE DRAWINGS

[FIG. 1] FIG. 1 is a plan view of a touch panel 20a structuring a liquid crystal display device 40a in accordance with a first embodiment.
[FIG. 2] FIG. 2 is a cross-sectional view of the liquid crystal display device 40a taken along line II-II in FIG. 1.
[FIG. 3] FIG. 3 is a perspective view of a digital camera 50a including the liquid crystal display device 40a.
[FIG. 4] FIG. 4 is a front view of a mobile phone 50b including the liquid crystal display device 40a.
[FIG. 5] FIG. 5 is a plan view of a touch panel 20b structuring a liquid crystal display device in accordance with a second embodiment.
[FIG. 6] FIG. 6 is a plan view of a touch panel 20c structuring a liquid crystal display device 40c in accordance with a third embodiment.
[FIG. 7] FIG. 7 is a cross-sectional view of the liquid crystal display device 40c taken along line VII-VII in FIG. 6.
[FIG. 8] FIG. 8 is a plan view of a touch panel 20d structuring a liquid crystal display device 40d in accordance with a fourth embodiment.
[FIG. 9] FIG. 9 is a cross-sectional view of the liquid crystal display device 40d taken along line IX-IX in FIG. 8.
[FIG. 10] FIG. 10 is a plan view of a touch panel 20e structuring a liquid crystal display device 40e in accordance with a fifth embodiment.
[FIG. 11] FIG. 11 is a cross-sectional view of the liquid crystal display device 40e taken along line XI-XI in FIG. 10.
[FIG. 12] FIG. 12 is a plan view of a conventional touch panel 120 of a capacitive type.

### DESCRIPTION OF EMBODIMENTS

In the following, embodiments of the present invention will be described in detail, referring to the drawings. Note that the present invention is not limited to the following embodiments.

### (First Embodiment of the Invention)

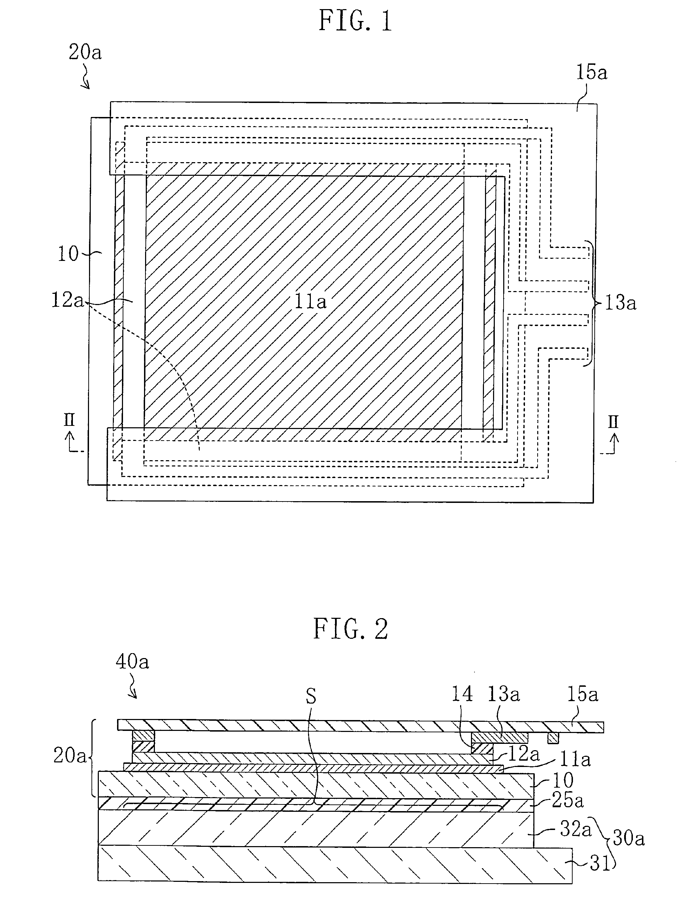

FIGS. 1 to 4 show a first embodiment of a display device, electronic equipment provided with the display device, and a touch panel in accordance with the present invention. Specifically, FIG. 1 is a plan view of a touch panel 20a structuring a liquid crystal display device 40a of the present embodiment, and FIG. 2 is a cross-sectional view of the liquid crystal display device 40a taken along line II-II in FIG. 1.

As shown in FIG. 2, the liquid crystal display device 40a includes: a liquid crystal display panel 30a, e.g., of an active matrix driven type; and a touch panel 20a of the capacitive type that is arranged at a display screen S of the liquid crystal display panel 30a having an adhesive layer 25a interposed therebetween.

As shown in FIG. 2, the liquid crystal display panel 30a includes: an active matrix substrate 31 and a counter substrate 32a arranged as a pair of substrates disposed so as to oppose to each other; and a liquid crystal layer (not shown) arranged between the active matrix substrate 31 and the counter substrate 32a. At each of the top plane and the bottom plane of the liquid crystal display panel 30a, a polarizer (not shown) is bonded.

The active matrix substrate 31 includes: a plurality of gate lines (not shown) arranged to extend in parallel to one another, e.g., on a glass substrate; a plurality of source lines (not shown) arranged to extend in parallel to one another and in a direction perpendicular to the gate lines; a plurality of TFTs (not shown) respectively arranged per each of intersections of the gate lines and the source lines; an interlayer insulating film (not shown) arranged so as to cover the TFTs; a plurality of pixel electrodes (not shown) arranged on the interlayer insulating film in a matrix pattern and respectively connected to the TFTs; and an alignment film (not shown) arranged so as to cover the pixel electrodes. Here, the pixel electrodes each structure a pixel that is the smallest unit of an image, and by being arranged in a matrix pattern, they structure a display region as a whole, which carries out image display.

The counter substrate 32a includes: a color filter layer (not shown) that is arranged, e.g., on a glass substrate, and that has a red-colored layer (R), a green-colored layer (G) and a blue-colored layer (B); a common electrode (not shown) arranged so as to cover the color filter layer; and an alignment film (not shown) arranged so as to cover the common electrode.

As shown in FIGS. 1 and 2, the touch panel 20a includes a first substrate 10 such as a glass substrate, and a second substrate 15a such as a film substrate that is arranged at the first substrate 10 having an anisotropic conductive film (hereinafter referred to as "ACF") 14 therebetween, and that extends along three sides (the top side, the bottom side and the right side in FIG. 1) of the first substrate 10.

As shown in FIGS. 1 and 2, at the top plane of the first substrate 10, a touch detection electrode 11a is arranged in a rectangular manner by a transparent conductive film of a material such as ITO (Indium Tin Oxide), and a frame wiring 12a is arranged on the touch detection electrode 11a in a frame-like manner as being formed by a single- or multi-layered metal conductive film made up of material(s) such as gold, nickel, aluminium, copper, and silver paste, so as to extend along the periphery of the touch detection electrode 11a. It is noted that an insulating layer made up of an organic resin film of various kinds such as an acrylic resin may be provided so as to cover the touch detection electrode 11a and the frame wiring 12a. Here, as the insulating layer covering the touch detection electrode 11a and the frame wiring 12a, an organic resin film that does not contain carboxylic acid is preferable, for the purpose of suppressing deterioration of the ITO film. In the first substrate 10 and the touch panel 20a including the first substrate 10, a display region that carries out image display is defined within the frame wiring 12a, and a frame region having a frame wiring 12a is defined around the display region. It is noted that the frame wiring 12a is a linearization pattern for uniformizing the electric field distributed over the touch detection electrode 11a and for improving the linearity thereof.

As shown in FIGS. 1 and 2, at the bottom plane of the second substrate 15a, four lead wirings 13a are arranged, each being formed by a single-layered film of a material such as silver paste, copper, and ITO, or by a multi-layered conductive film having a plated layer or the like covering such a single-layered film, in such a manner that one ends of the lead wirings 13a overlap the corner portions of the frame wiring 12a, and the other ends thereof extend to the central portion at one edge (the central portion at the right side in FIG. 1) of the substrate. It is noted that an insulating layer made up of an organic resin film of various kinds such as an acrylic resin may be provided so as to cover the lead wirings 13a. It is further noted that the second substrate 15a, the lead wirings 13a and the insulating layer may respectively be structured with a base film, a copper foil and a cover film structuring an FPC, for example.

The first substrate 10 and the second substrate 15a are adhered to each other by an ACF 14, and the frame wiring 12a and the lead wirings 13a are connected to each other via the ACF 14 (see FIG. 2).

The liquid crystal display device 40a structured as above is configured to operate as follows. By a prescribed voltage applied to the liquid crystal layer between the active matrix substrate 31 and the counter substrate 32a, transmittance of light transmitting through the liquid crystal display panel 30a is adjusted, whereby image display is carried out through the touch panel 20a. By a touch to the surface of the touch detection electrode 11a via the cover substrate (not shown), the protective film (not shown) and the like, the touch detection electrode 11a is grounded at the touched position by the capacitor of the human body, which changes the capacitor between the four corners of the frame wiring 12a and the touched position. Based on a value of current passing at this time through each of the lead electrodes 13a, the embedded IC (integrated circuit) in position detection circuitry (not shown) connected to the lead wirings 13a calculates by software to detect the touched position. Note that, while the touch panel 20a of the present embodiment has the frame wiring 12a connected to the four lead wirings 13a, and a touched position on a two-dimensionally spread plane is detected by measuring the current passing through each of the lead wirings 13a, the number of the lead wirings 13a connected to the frame wiring 12a (touch detection electrode 11a) is not limited to four. Here, though the minimum number of lead wirings required for detecting a two-dimensional position is three, an increase in the number of the lead wirings to five or more can improve the accuracy in detecting the position.

As described in the foregoing, in the touch panel 20a and the liquid crystal display device 40a including the touch panel 20a of the present embodiment, the lead wirings 13a connected to the touch detection electrode 11a is are arranged at the second substrate 15a, which is not the first substrate 10 provided with the touch detection electrode 11a. Therefore, as compared to a conventional case where the touch detection electrode (111, see FIG. 12) and the lead wirings (113, see FIG. 12) are arranged at an identical substrate (110, see FIG. 12), the frame region in the first substrate 10 can be designed to be narrower. This allows the second substrate 15a provided with the lead wirings 13a to be disposed so as to overlap the frame region of the first substrate 10, making it possible to minimize the frame region to the minimum possible extent.

Further, in the touch panel 20a and the liquid crystal display device 40a including the touch panel 20a of the present embodiment, the second substrate 15a is a flexible substrate such as an FPC. This makes it possible to structure the second substrate 15a easily and cost-effectively. Further, adhesion of the second substrate 15a in a folded state to the first substrate 10 makes it possible to further reduce the size of the frame region.

Still further, in the touch panel 20a and the liquid crystal display device 40a including the touch panel 20a of the present embodiment, the touch panel 20a is of the capacitive type, which means that the touch panel body is structured by a single substrate. This reduces the reflected light at the substrate interface attributed to the refractive index difference between the substrate structuring the touch panel and the adjacent constituent components. This makes it possible to improve the display quality of the liquid crystal display device 40a, and to reduce the thickness of the liquid crystal display device 40a.

Still further, in the touch panel 20a and the liquid crystal display device 40a including the touch panel 20a of the present embodiment, the touch detection electrode 11a is arranged only on the front plane (top plane) side of the first substrate 10. Therefore, as compared to a case, such as a fourth embodiment which will be described later, where the touch detection electrode is arranged on each of the front plane side and the rear plane side of the first substrate, or where it is arranged at each of the first substrate and another substrate, occurrence of the reflected light attributed to the touch detection electrode is suppressed, whereby the display quality of the liquid crystal display device 40a can be improved, and the thickness of the liquid crystal display device 40a can be reduced. Still further, as compared to a case where a plurality of touch detection electrodes are formed, an improvement in the manufacturing yield is facilitated, while the manufacturing steps are simplified and the required manufacturing period is shortened.

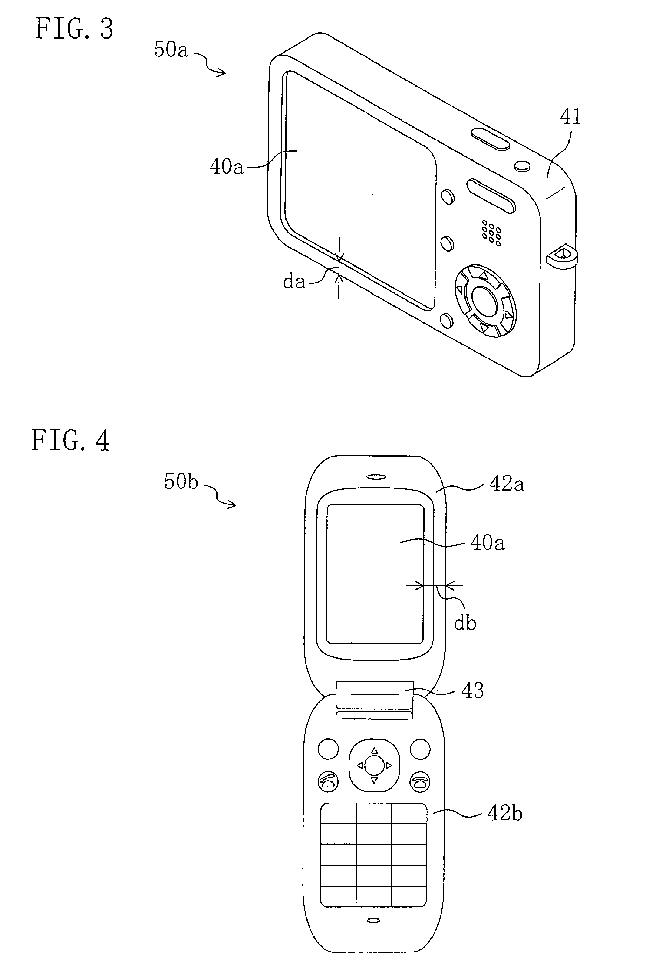

Here, FIGS. 3 and 4 show electronic equipment provided with the liquid crystal display device 40a. Specifically, FIG. 3 is a perspective view of a digital camera 50a including the liquid crystal display device 40a, and FIG. 4 is a front view of a mobile phone 50b including the liquid crystal display device 40a.

As shown in FIG. 3, the digital camera 50a includes a housing 41 in which an opening portion is formed so as to expose the display region of the touch panel 20a structuring the liquid crystal display device 40a is exposed via a cover or directly to the outside, and the liquid crystal display device 40a housed in the housing 41. In the digital camera 50a, the size of the frame region of the liquid crystal display device 40a is designed to be small as described above. Therefore, as shown in FIG. 3, a width da of the frame portion of the housing 41 can be narrowed, making it possible to reduce the equipment body in size.

As shown in FIG. 4, the mobile phone 50b includes a first housing 42a in which an opening portion is formed so as to expose the display region of the touch panel 20a structuring the liquid crystal display device 40a is exposed via a cover or directly to the outside, the liquid crystal display device 40a housed in the first housing 42a, and a second housing 42b arranged to be foldable relative to the first housing 42a about a hinge portion 43. In the mobile phone 50b, the size of the frame region of the liquid crystal display device 40a is designed to be small as described above. Therefore, as shown in FIG. 4, a width db of the frame portion of the first housing 42a can be narrowed, making it possible to reduce the equipment body in size.

As has been described, in the present embodiment, the liquid crystal display panel 30a and the touch panel 20a are adhered to each other by the adhesive layer 25a. On the other hand, the liquid crystal display panel 30a and the touch panel 20a may be fixed to each other by being housed in the housing in a state having a gasket interposed between the liquid crystal display panel 30a and the touch panel 20a.

### (Second Embodiment of the Invention)

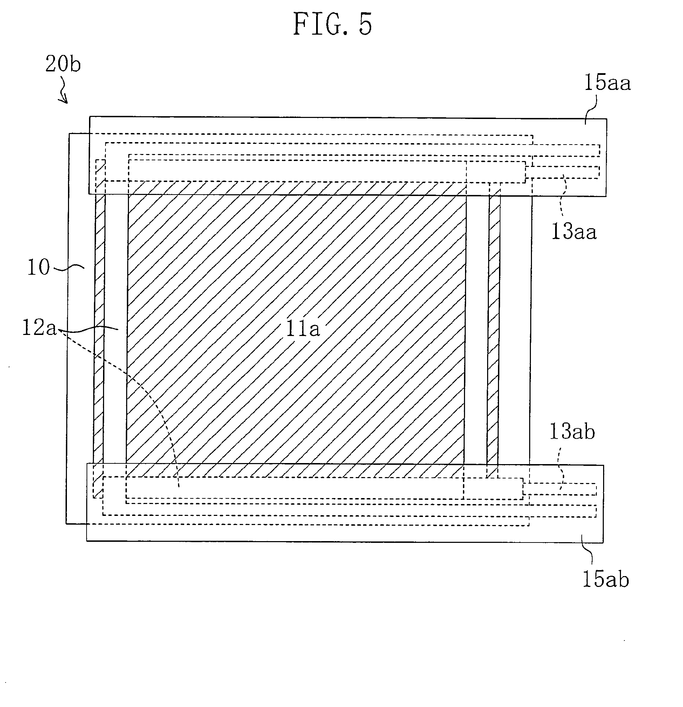

FIG. 5 is a plan view of a touch panel 20b structuring a liquid crystal display device of the present embodiment. It is noted that, in the embodiments that follows, the same parts as in FIGS. 1 to 4 are denoted by the same reference numbers, and detailed description thereof is omitted.

In the touch panel 20a of the first embodiment, the second substrate 15a is a single substrate. On the other hand, in the touch panel 20b of the present embodiment, second substrates (15aa and 15ab) are two divided substrates.

As shown in FIG. 5, specifically, the touch panel 20b includes a first substrate 10, and the second substrates 15aa and 15ab such as film substrates, which are arranged at the first substrate 10 having an ACF (not shown) interposed therebetween and respectively extend along the top side and the bottom side of the first substrate 10.

As shown in FIG. 5, at the bottom plane of the second substrate 15aa, two lead wirings 13aa are arranged, each being formed by a conductive film of a material such as silver, copper, and ITO, such that one ends of the lead wirings 13aa overlap the corner portions of the frame wiring 12a, and the other ends thereof extend to one edge (upper right portion in FIG. 5) of the substrate. Similarly, as shown in FIG. 5, at the bottom plane of the second substrate 15ab, two lead wirings 13ab are arranged, each being formed by a conductive film of a material such as silver, copper, and ITO, such that one ends of the lead wirings 13ab overlap the corner portions of the frame wiring 12a, and the other ends thereof extend to the one edge (lower right portion in FIG. 5) of the substrate.

In the touch panel 20b and the liquid crystal display device including the touch panel 20b of the present embodiment, similarly to the above-described first embodiment, because the transparent second substrates 15aa and 15ab respectively provided with the lead wirings 13aa and 13ab can be disposed so as to overlap the frame region of the first substrate 10, it becomes possible to minimize the frame region to the minimum possible extent. Further, because the second substrates 15aa and 15ab are structured as a plurality of divided substrates instead of a single substrate, a reduction in the area of the second substrates 15aa and 15ab can be achieved. Still further, such a reduction in the required area of the second substrate reduces the manufacturing steps and the materials for use, which in turn contributes toward environment improvement.

### (Third Embodiment of the Invention)

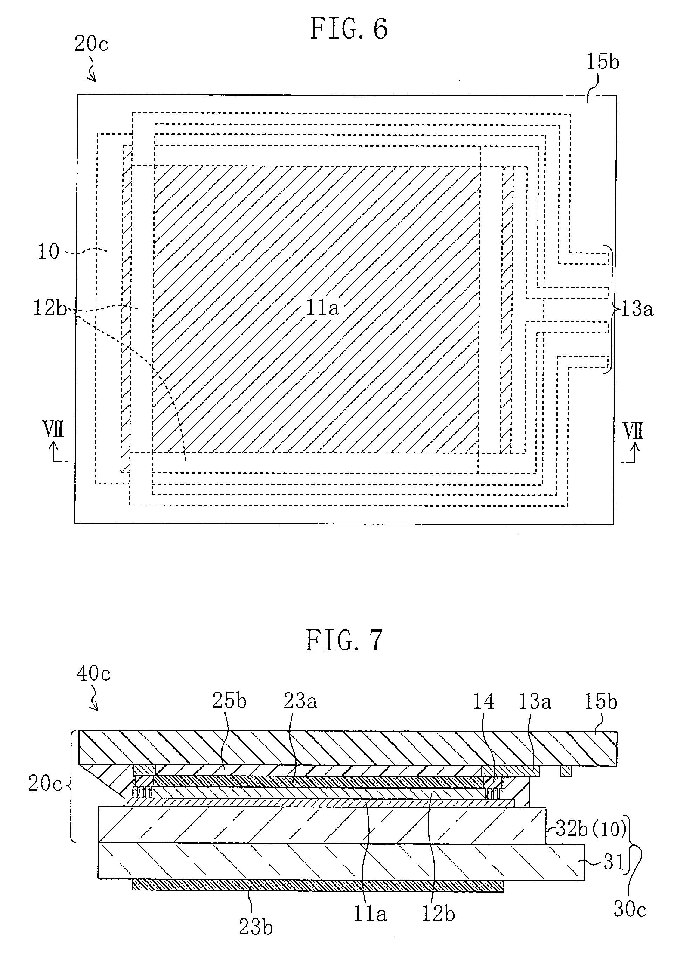

FIG. 6 is a plan view of a touch panel 20c structuring a liquid crystal display device 40c of the present embodiment, and FIG. 7 is a cross-sectional view of the liquid crystal display device 40c taken along line VII-VII in FIG. 6.

As shown in FIG. 7, the liquid crystal display device 40c includes: a liquid crystal display panel 30c, e.g., of the active matrix driven type; and a touch panel 20c of the capacitive type, whose first substrate 10 is a counter substrate 32b of the liquid crystal display panel 30c.

As shown in FIG. 7, the liquid crystal display panel 30c includes an active matrix substrate 31, the counter substrate 32b, and a liquid crystal layer (not shown) arranged between the active matrix substrate 31 and the counter substrate 32b. At each of the top plane and the bottom plane of the liquid crystal display panel 30c, polarizers 23a and 23b are respectively bonded.

The counter substrate 32b includes: a color filter layer (not shown) that is arranged, e.g., on a glass substrate, and that has a red-colored layer (R), a green-colored layer (G) and a blue-colored layer (B); a common electrode (not shown) arranged so as to cover the color filter layer; and an alignment film (not shown) arranged so as to cover the common electrode.

As shown in FIGS. 6 and 7, the touch panel 20c includes the first substrate 10 (counter substrate 32b) such as a glass substrate, and a transparent second substrate 15b such as a glass substrate and a plastic substrate, which is arranged at the first substrate 10 having an ACF 14 and an adhesive layer 25b therebetween.

As shown in FIGS. 6 and 7, at the top plane of the first substrate 10, a touch detection electrode 11a is arranged in a rectangular manner as being formed by a transparent conductive film of a material such as ITO (Indium Tin Oxide), and a frame wiring 12b is arranged on the touch detection electrode 11a in a frame-like manner as being formed by a metal conductive film such as silver, so as to extend along the periphery of the touch detection electrode 11a. It is noted that an insulating layer made up of an organic resin film of various kinds such as an acrylic resin may be provided so as to cover the touch detection electrode 11a and the frame wiring 12b.

As shown in FIGS. 6 and 7, at the bottom plane of the second substrate 15b, four lead wirings 13a are arranged, each being formed by a conductive film of a material such as silver, copper, and ITO, such that one ends of lead wirings 13a overlap the corner portions of the frame wiring 12b, and the other ends thereof extend to the central portion of one edge (the central portion at the right side in FIG. 6) of the substrate. It is noted that an insulating layer made up of an organic resin film of various kinds such as an acrylic resin may be provided so as to cover the lead wirings 13a. It is further noted that the second substrate 15b is structured e.g., by a cover substrate for protecting the surface of the touch panel 20b.

The first substrate 10 and the second substrate 15b are adhered to each other by an ACF 14 and the adhesive layer 25b, and the frame wiring 12b and the lead wiring 13a are connected to each other via the ACF 14. Here, as shown in FIG. 7, each corner portion of the frame wiring 12b is formed in a comb-shape manner. This makes it possible to surely connect the frame wiring 12b that is connected to the touch detection electrode 11a and the lead wirings 13b to each other.

In the touch panel 20c and the liquid crystal display device 40c including the touch panel 20c of the present embodiment, similarly to the above-described embodiments, the transparent second substrate 15b provided with the lead wirings 13a can be disposed so as to overlap the frame region (and the display region) of the first substrate 10, which makes it possible to minimize the frame region to the minimum possible extent. Further, because the substrate (first substrate 10) structuring the touch panel 20c and the substrate (counter substrate 32b) structuring the liquid crystal display panel 30c are structured with one shared component, occurrence of the reflected light attributed to the substrates structuring the touch panel 20c is suppressed, whereby the display quality of the liquid crystal display device 40c can be improved, and the thickness of the liquid crystal display device 40c can be reduced. Still further, the resulting simplified manufacturing steps make it possible to shorten the required manufacturing period and to improve manufacturing yield.

Further, in the touch panel 20c and the liquid crystal display device 40c including the touch panel 20c of the present embodiment, at least one of the connection portion of the touch detection electrode, and the connection portion of each of the lead wirings is formed in a comb-shape manner. This makes it possible to surely connect the touch detection electrode and the lead wirings to each other, thereby improving the reliability of the connection between the touch detection electrode and the lead wirings.

Still further, in the touch panel 20c and the liquid crystal display device 40c including the touch panel 20c of the present embodiment, the second substrate 15b is structured by a cover substrate. This makes it possible, with a product specification according to which the cover substrate is disposed on the front plane of the touch panel 20c, to reduce the thickness of the liquid crystal display device 40c, and to suppress manufacturing steps and the materials for use, thereby contributing toward environment improvement.

### (Fourth Embodiment of the Invention)

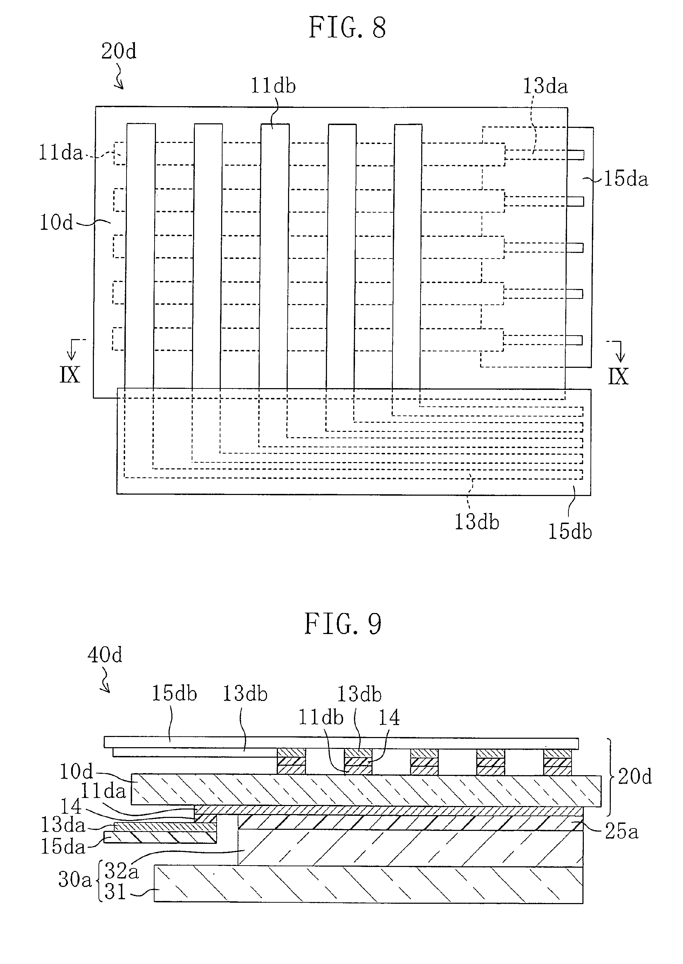

FIG. 8 is a plan view of a touch panel 20d structuring a liquid crystal display device 40d of the present embodiment, and FIG. 9 is a cross-sectional view of the liquid crystal display device 40d taken along line IX-IX in FIG. 8.

In the touch panels 20a to 20c of the above-described embodiments, the touch detection electrode 11a is arranged at the top plane of the first substrate 10 so as to overlap the entire display screen S. On the other hand, in the touch panel 20d of the present embodiment, a plurality of touch detection electrodes 11da are arranged at the bottom plane of a first substrate 10d, and a plurality of touch detection electrodes 11db are arranged at the top plane of the first substrate 10d.

As shown in FIGS. 8 and 9, specifically, the touch panel 20d includes the first substrate 10d such as a glass substrate, a second substrate 15da such as a film substrate that is arranged at the bottom plane of the first substrate 10d having an ACF 14 interposed therebetween, and that extends one side (right side in FIG. 8) of the first substrate 10d, and a second substrate 15db such as a film substrate that is arranged at the top plane of the first substrate 10d having an ACF 14 interposed therebetween, and that extends one side (bottom side in FIG. 8) along the first substrate 10d. It is noted that, as shown in FIGS. 8 and 9, while the second substrate 15da and the second substrate 15db are separately arranged so as to be away from each other in the present embodiment, they may be integrated e.g., by being folded at a coupled portion.

As shown in FIGS. 8 and 9, at the bottom plane of the first substrate 10d, a plurality of touch detection electrodes 11da are arranged to extend in parallel to one another as being formed by a transparent conductive film of a material such as ITO. It is noted that an insulating layer made up of an organic resin film of various kinds such as an acrylic resin may be provided so as to cover the touch detection electrodes 11da.

As shown in FIGS. 8 and 9, at the top plane of the first substrate 10d, a plurality of touch detection electrodes 11 db are arranged to extend in parallel to one another as being formed by a transparent conductive film of a material such as ITO. It is noted that an insulating layer made up of an organic resin film of various kinds such as an acrylic resin may be provided so as to cover the touch detection electrodes 11db. Here, as shown in FIG. 8, the touch detection electrodes 11db are arranged so as to be perpendicular to the touch detection electrodes 11da.

As shown in FIGS. 8 and 9, at the top plane of the second substrate 15da, a plurality of lead wirings 13a are arranged, each being formed by a conductive film of a material such as silver, copper, and ITO, such that one ends of the lead wirings 13da overlap the end portions of the touch detection electrodes 11da, and the other ends thereof extend to one edge (right side in FIG. 8) of the substrate. It is noted that an insulating layer made up of an organic resin film of various kinds such as an acrylic resin may be provided so as to cover the lead wirings 13da.

As shown in FIGS. 8 and 9, at the bottom plane of the second substrate 15db, a plurality of lead wirings 13db are arranged, each being formed by a conductive film of a material such as silver, copper, and ITO, such that one ends of the lead wirings 13db overlap the end portions of the touch detection electrodes 11db, and the other end thereof extend to one edge (right side in FIG. 8) of the substrate. It is noted that an insulating layer made up of an organic resin film of various kinds such as an acrylic resin may be provided so as to cover the lead wirings 13db.

The first substrate 10d and the second substrate 15da are adhered to each other by an ACF 14, and the touch detection electrodes 11da and the lead wirings 13a are connected to each other via the ACF 14 (see FIG. 9).

The first substrate 10d and the second substrate 15db are adhered to each other by an ACF 14, and the touch detection electrodes 11db and the lead wirings 13db are connected to each other via the ACF 14 (see FIG. 9).

In the touch panel 20d and the liquid crystal display device 40d including the touch panel 20d of the present embodiment, similarly to the above-described embodiments, the second substrate 15da provided with the lead wirings 13da, and the second substrate 15db provided with the lead wirings 13db can be disposed so as to overlap the frame region of the first substrate 10d, which makes it possible to minimize the frame region to the minimum possible extent.

### (Fifth Embodiment of the Invention)

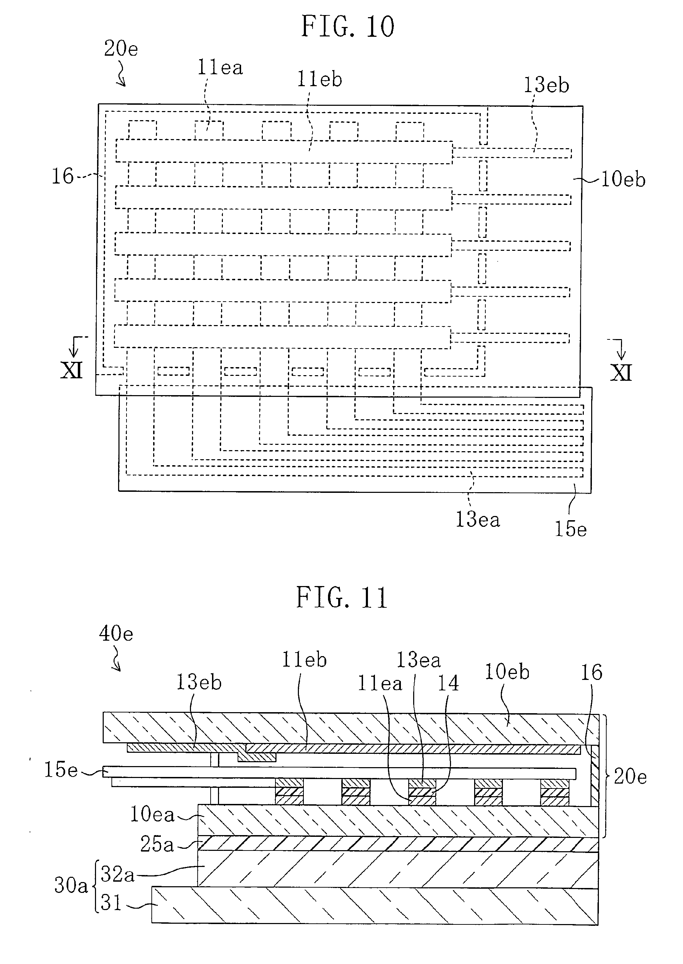

FIG. 10 is a plan view of a touch panel 20e structuring a liquid crystal display device 40e of the present embodiment, and FIG. 11 is a cross-sectional view of the liquid crystal display device 40e taken along line XI-XI in FIG. 10.

The touch panels 20a to 20d of the above-described embodiments are each a touch panel of the capacitive type. On the other hand, the touch panel 20e of the present embodiment is a touch panel of the resistive type.

As shown in FIGS. 10 and 11, specifically, the touch panel 20e includes: a bottom-side first substrate 10ea such as a glass substrate; a second substrate 15e such as a film substrate that is arranged at the top plane of the bottom-side first substrate 10ea having an ACF 14 interposed therebetween, and that extends along one side (bottom side in FIG. 10) of the first substrate 10; and a top-side first substrate 10eb such as a glass substrate that is arranged so as to oppose to the bottom-side first substrate 10ea having a spacer 16 interposed therebetween. It is noted that, as shown in FIGS. 10 and 11, while the spacer 16 of a frame-like manner is exemplarily shown in the present embodiment, a plurality of spacers may be dispersedly located within the display region.

As shown in FIGS. 10 and 11, at the top plane of the bottom-side first substrate 10ea, a plurality of touch detection electrodes 11ea are arranged to extend in parallel to one another, each being formed by a transparent conductive film of a material such as ITO.

As shown in FIGS. 10 and 11, at the bottom plane of the top-side first substrate 10eb, a plurality of touch detection electrodes 11eb are arranged to extend in parallel to one another, each being formed by a transparent conductive film of a material such as ITO. Lead wirings 13eb are arranged so as to respectively extend from ends of the touch detection electrodes 11 eb to one edge (right side in FIG. 10) of the substrate. As shown in FIG. 10, the touch detection electrodes 11eb are arranged to be perpendicular to the touch detection electrodes 11ea.

As shown in FIGS. 10 and 11, at the bottom plane of the second substrate 15e, a plurality of lead wirings 13ea are arranged, each being formed by a conductive film of a material such as silver, copper, and ITO, such that one ends of the lead wirings 13ea overlap the end portions of the touch detection electrodes 11ea, and the other ends thereof extend to one edge (right side in FIG. 10) of the substrate. It is noted that an insulating layer made up of an organic resin film of various kinds such as an acrylic resin may be provided so as to cover the lead wirings 13ea.

In the touch panel 20e and the liquid crystal display device 40e including the touch panel 20e of the present embodiment, similarly to the above-described embodiments, the second substrate 15e provided with the lead wirings 13ea can be disposed so as to overlap the frame region of the first substrates (10ea and 10eb), which makes it possible to minimize the frame region to the minimum possible extent. Further, because the touch panel 20e is of the resistive type, a pen-based input can surely be entered to the liquid crystal display device 40e.

While the liquid crystal display devices have exemplarily been described in the above-described embodiments as a display device, the present invention is also applicable to other display devices such as an organic EL (electroluminescence) display device and a plasma display device.

While the touch panels of the capacitive type and the resistive type have exemplarily been described in the above-described embodiments, the present invention is also applicable to other touch panels, such as of an electromagnetic induction type. In other words, the present invention is applicable to touch panels that are capable of generating its coordinate value or an input signal such as ON/OFF, in response to a touch or a pressure applied by a finger, a pen or the like.

While the digital camera and the mobile phone have exemplarily been described in the above-described embodiments as electronic equipment, the present invention is also applicable to electronic equipment such as a television set, a personal computer, a portable game console, a radio, an audio tool, a DVD player, a positional information guiding tool, and a remote controller.

### INDUSTRIAL APPLICABILITY

As has been described above, with the present invention, it becomes possible to reduce the size of the frame region of a display device, and therefore the present invention is useful for various kinds of electronic equipment having a display device.

### DESCRIPTION OF REFERENCE CHARACTERS

S Display Screen
10, 10d First Substrate
10ea Bottom Plane Side First Substrate
10eb Top Plane Side First Substrate
11a, 11da, 11db, 11ea, 11eb Touch Detection Electrode
13a, 13aa, 13ab, 13da, 13db, 13ea, 13eb Lead Electrode
14 ACF
15a, 15aa, 15ab, 15b, 15da, 15db, 15e Second Substrate
20a to 20e Touch Panel
30a, 30c Liquid Crystal Display Panel
31 Active Matrix Substrate
32a, 32b Counter Substrate
40a, 40c to 40e Liquid Crystal Display Device
50a Digital Camera (Electronic Equipment)
50b Mobile Phone (Electronic Equipment)

## Claims

1. A display device, comprising:
a touch panel installed in a display screen,
wherein
the touch panel includes
a touch detection electrode arranged at a first substrate so as to be capable of detecting a touch, and a lead wiring connected to the touch detection electrode for detecting a touched position at the touch detection electrode, and
wherein
at least part of the lead wiring is arranged at a second substrate arranged adjacent to the first substrate.

2. The display device of claim 1, wherein
the second substrate is a flexible substrate having flexibility.

3. The display device of claim 1 or 2, wherein
the touch detection electrode and the lead wiring are connected via an anisotropic conductive film, and
at least one of the touch detection electrode and the lead wiring is formed in a comb-shape manner at a portion establishing the connection via the anisotropic conductive film.

4. The display device of any one of claims 1 to 3, wherein
the touch panel is of a capacitive type.

5. The display device of claim 4, wherein
the touch detection electrode is arranged on only one plane side of the first substrate.

6. The display device of any one of claims 1 to 5, further comprising:
a display panel including a pair of substrates disposed so as to oppose to each other,
wherein
the first substrate is one of the pair of substrates.

7. The display device of any one of claims 1 to 6, wherein
the second substrate is divided into a plurality of pieces.

8. The display device of any one of claims 1 to 7, wherein
the second substrate is a cover substrate for protecting a surface of the touch panel.

9. The display device of any one of claims 1 to 3 and 6 to 8, wherein the touch panel is of a resistive type.

10. Electronic equipment, comprising the display device of any one of claims 1 to 9.

11. A touch panel, comprising:
a touch detection electrode arranged at a first substrate so as to be capable of detecting a touch; and
a lead wiring connected to the touch detection electrode for detecting a touched position at the touch detection electrode,
wherein
at least part of the lead wiring is arranged at a second substrate arranged adjacent to the first substrate.
